# EUROPÄISCHE PATENTANMELDUNG

(11) **EP 0 844 762 A2**
(43) Veröffentlichungstag der Anmeldung: **27.05.1998**
(21) Anmeldenummer: 97440106.9
(22) Anmeldetag: 14.11.1997
(51) Int. Cl.: H04L 9/08

(54) **Verfahren zum gesicherten Nachrichtenaustausch bei Massendiensten, sowie Teilnehmereinrichtung und Diensteanbietereinrichtung hierfür**

(30) Priorität: 26.11.1996 DE 19648824
(71) Anmelder: ALCATEL ALSTHOM COMPAGNIE GENERALE D'ELECTRICITE, 75008 Paris (FR)
(72) Erfinder: Bostelmann, Gert Dr., 71665 Vaihingen (DE); Stiefel, Rolf, 70839 Gerlingen (DE)
(74) Vertreter: Brose, Gerhard, Dipl.-Ing.

(57) **Zusammenfassung**

Die Erfindung betrifft ein Verfahren zum gesicherten Nachrichtenaustausch bei Massendiensten zwischen der Teilnehmereinrichtung (Si) eines Teilnehmers an diesem Massendienst und einer Zentrale (Z) mittels eines Schlüssels (KSi) eines symmetrischen Verfahrens, der nur bei diesem Teilnehmer und der Zentrale bekannt sein soll, durch den sowohl unverschlüsselte Daten verschlüsselt, als auch verschlüsselte Daten entschlüsselt werden können und der von seiten des Teilnehmers vorgegeben wird, bei dem die Zentrale (Z) ein Schlüsselpaar mit einem öffentlichen Schlüssel (PU) und einem geheimen Schlüssel (PR) besitzt, wobei der öffentliche Schlüssel (PU) bei jedem Teilnehmer und der geheime Schlüssel (PR) nur bei der Zentrale bekannt sein darf, wobei die Anwendung nur eines der beiden Schlüssel (PU, PR) auf unverschlüsselte Daten diese verschlüsselt und nur die darauffolgende Anwendung des anderen Schlüssels (PR, PU) die verschlüsselten Daten wieder entschlüsselt, wobei bei diesem Teilnehmer, wenn er mit der Zentrale verschlüsselt Daten tauschen möchte, zunächst der öffentliche Schlüssel (PU) der Zentrale und ein eigener Schlüssel (KSi) ermittelt wird, wobei der Schlüssel (KSi) des Teilnehmers mit dem öffentlichen Schlüssel (PU) des Schlüsselpaars der Zentrale verschlüsselt wird und wobei der so verschlüsselte Schlüssel des Teilnehmers an die Zentrale übermittelt und für die gesicherte Übertragung von Daten verwendet wird, sowie eine Teilnehmereinrichtung und eine Zentrale hierfür.

## Beschreibung

Die Erfindung betrifft ein Verfahren zum gesicherten Nachrichtenaustausch bei Massendiensten nach dem Oberbegriff des Anspruchs 1, eine Teilnehmereinrichtung hierfür nach dem Oberbegriff des Anspruchs 11 und eine Zentrale zum Durchführen eines Verfahrens zum gesicherten Nachrichtenaustausch bei Massendiensten nach dem Oberbegriff des Anspruchs 12.

Unter Massendienst sollen hier Dienste verstanden werden, bei denen jeweils einem einzelnen Anbieter eine Vielzahl von Teilnehmern gegenübersteht. Beispiele hierfür sind Lotteriegesellschaften und Banken. Einerseits muß hier eine hohe Sicherheit beim elektronischen Datenaustausch vorgesehen werden, andererseits ist aber zu berücksichtigen, daß auch solche Teilnehmer teilnehmen können sollen, die vorher noch keinen Kontakt mit dem Anbieter hatten.

Um Nachrichten, und damit auch einzelne Daten, sicher zu übertragen, sind verschiedene Verschlüsselungsmethoden bekannt. Meist werden symmetrische Verfahren mit nur einem Schlüssel verwendet. Diese Verfahren sind Abbildungsmethoden, die umkehrbar und in der Regel auch schnell und mit geringem technischem Aufwand anwendbar sind. Für die automatisierte, insbesondere die elektronische Anwendung werden hierfür meist Algorithmen verwendet, während früher oft Zuordnungstabellen verwendet wurden. Mit jedem Schlüssel kann eine Gruppe von Nutzern mit in der Regel zwei Teilnehmern arbeiten. Diese Gruppe ist dann nach außen abgesichert, intern aber nicht. Jeder dieser Teilnehmer kann mehreren solcher Gruppen angehören und hat dann für jede dieser Gruppen einen geheim zu haltenden Schlüssel. Bei der Auswahl des jeweiligen Verfahrens ist zu berücksichtigen, daß die Sicherheit gegen unbefugtes Entschlüsseln und der zeitliche und technische Aufwand bei der Anwendung des Verfahrens nur gleichzeitig erhöht oder gesenkt werden können. Von der Verschlüsselung mit solchen symmetrischen Verfahren geht die vorliegende Erfindung aus.

Zwischenzeitlich sind auch unsymmetrische Verfahren bekannt, die mit zwei Schlüsseln arbeiten und so wirken, daß die Anwendung eines der beiden Schlüssel auf unverschlüsselte Daten diese verschlüsselt und nur die darauffolgende Anwendung des zugehörigen anderen Schlüssels die verschlüsselten Daten wieder entschlüsselt. Es genügt, wenn einer der beiden Schlüssel geheim bleibt. Man spricht dann von einem öffentlichen und einem geheimen Schlüssel. Hier genügt es, wenn jeder Benutzer einen einzigen eigenen Schlüssel, genaugenommen ein eigenes Schlüsselpaar, besitzt. Jeder, der ein solches Schlüsselpaar besitzt, kann mit jedem anderen, der ebenfalls ein solches Schlüsselpaar besitzt, gesichert Daten tauschen. Nur jeweils ein Schlüssel des Schlüsselpaars, den der jeweilige Eigentümer behält, muß als sogenannter "geheimer Schlüssel" geheim gehalten werden. Der andere Schlüssel, öffentlicher Schlüssel genannt, kann und soll sogar frei zugänglich sein. Jeder Beliebige kann den öffentlichen Schlüssel verwenden, um dem Besitzer des Schlüssels verschlüsselt Nachrichten zu senden, die nur dieser entschlüsseln kann. Diese Art von Schlüsseln ist, bei entsprechender Schlüssellänge, praktisch nicht unbefugt zu entschlüsseln; die Anwendung ist aber aufwendig. An dieser Stelle kann auch darauf hingewiesen werden, daß die umgekehrte Anwendung eine Unterschriftsfunktion ergibt. Dabei verschlüsselt der Besitzer des Schlüsselspaars die zu unterschreibende Nachricht mit seinem geheimen Schlüssel. Dies kann zwar von jedem Beliebigen entschlüsselt werden; die Herkunft vom Besitzer des geheimen Schlüssels ist aber gesichert.

Für den Nachrichtenaustausch bei Massendiensten sind symmetrische Verfahren ungeeignet, weil vorab individuell Schlüssel vereinbart werden müßten. Solange nicht jeder Einzelne ein Schlüsselpaar für ein unsymmetrisches Verschlüsselungsverfahren besitzt, sind hierfür auch solche Schlüssel nicht geeignet.

Der Erfindung liegt die Aufgabe zugrunde, ein Verfahren zum gesicherten Austausch von Nachrichten bei Massendiensten und die zugehörigen Einrichtungen anzugeben, die ohne aufwendige Schlüsselverwaltung ein hohes Maß an Sicherheit gewährleisten.

Diese Aufgabe wird erfindungsgemäß gelöst durch ein Verfahren nach der Lehre des Anspruchs 1, eine Teilnehmereinrichtung nach der Lehre des Anspruchs 11 und eine Zentrale nach der Lehre des Anspruchs 12.

Der Grundgedanke dieser Erfindung liegt in einer geeigneten Kombination symmetrischer und unsymmetrischer Schlüsselverfahren, wobei die Besonderheit von Massendiensten Berücksichtigung findet. An sich genügt es grundsätzlich, wenn immer nur ein Teilnehmer eines Nachrichtenaustausches einen Schlüssel für ein unsymmetrisches Verfahren besitzt, der dann verwendet wird, um auf sichere Weise einen Schlüssel für den nachfolgenden Informationsaustausch mit einem symmetrischen Verfahren zu vereinbaren. Besitzt nun der Massendienstanbieter ein Schlüsselpaar für ein unsymmetrisches Verfahren, so ist schon allein damit sichergestellt, daß immer einer der beiden an einem Nachrichtenaustausch Beteiligten ein solches Schlüsselpaar hat. Bei untereinander gleichartigen Teilnehmern wäre dies nicht der Fall. Dort könnte nicht jeder Beliebige, der kein eigenes Schlüsselpaar für ein unsymmetrisches Verfahren besitzt, einen beliebigen Anderen anrufen und sicher sein, daß dieser dann ein solches Schlüsselpaar besitzt.

Weitere Ausgestaltungen der Erfindung sind den Unteransprüchen und der nachfolgenden Beschreibung zu entnehmen.

Im folgenden wird die Erfindung unter Zuhilfenahme der beiliegenden Zeichnungen weiter erläutert:
- Figur 1: zeigt ein Beispiel eines erfindungsgemäßen Verfahrensablaufs.
- Figur 2: zeigt ein System mit einer erfindungsgemäßen Teilnehmereinrichtung und einer erfindungsgemäßen Zentrale.

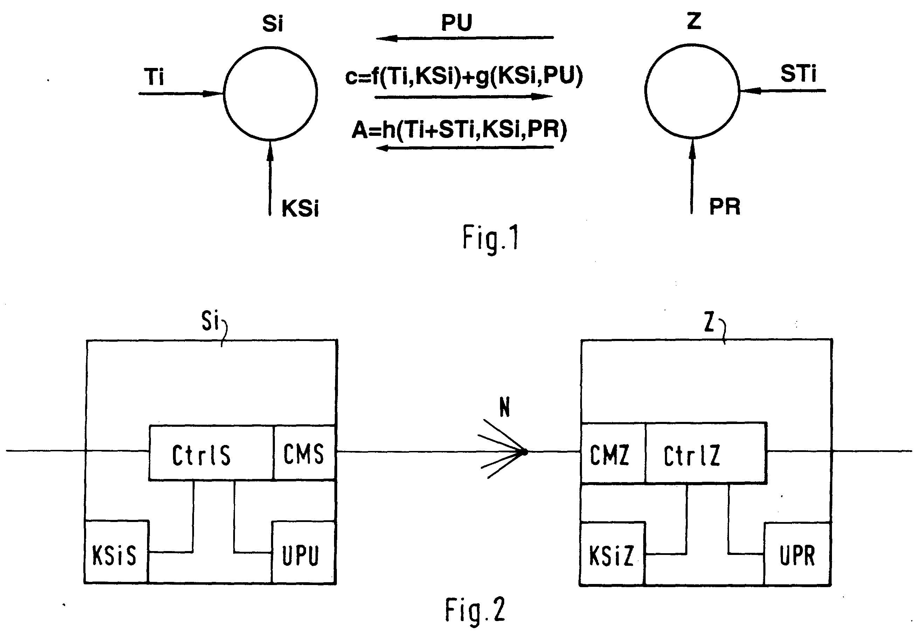

Anhand der Figur 1 wird zunächst ein typischer Verfahrensablauf beschrieben. Ein beliebiger Teilnehmer Si aus einer Vielzahl von Teilnehmern nimmt Verbindung mit einer Zentrale Z auf und läßt sich deren öffentlichen Schlüssel PU senden. Zur Kommunikation zwischen Teilnehmer und Zentrale wird dann ein Schlüssel KSi dieses Teilnehmers Si verwendet, der für ein symmetrisches Verfahren vorgesehen ist. Einerseits wird nun mit diesem Schlüssel KSi der eigentlich zu übertragende Text Ti oder beliebige andere Daten verschlüsselt, f(Ti,KSi). Andererseits wird dieser Schlüssel selbst mit dem öffentlichen Schlüssel PU der Zentrale Z verschlüsselt, g(KSi,PU). Beide Teile werden dann der Zentrale übermittelt, c = f + g. In der Zentrale Z wird mit Hilfe des geheimen Schlüssels PR der Schlüssel KSi und mit dessen Hilfe der übertragene Text Ti entschlüsselt. Der Schlüssel KSi kann für die weitere Kommunikation zwischen diesem Teilnehmer und der Zentrale als Sitzungsschlüssel verwendet werden.

Für die vorliegende Erfindung ist es zunächst unerheblich, ob alle Informationen oder nur Teile davon verschlüsselt werden, ob beide Seiten verschlüsseln oder nicht, ob der Teilnehmer Si den Schlüssel PU schon vorab besitzt oder, wie hier dargestellt, erst nach oder bei der Verbindungsaufnahme erhält, ob der Schlüssel KSi durch einen eingebauten Schlüsselgenerator jeweils neu, und dann bevorzugt auch jeweils anders, erzeugt oder aus einem Speicher abgerufen wird und ob zum Verschlüsseln noch andere Sicherungsmaßnahmen, wie Identifizierung, Echtheitsüberprüfung (Authentifizierung) oder elektronisches Unterschreiben hinzukommen.

Im vorliegenden Beispiel nach Figur 1 wird nun von der Zentrale Z noch eine Bestätigungsantwort A zurückgeschickt. Damit kann beispielsweise Tatsache und Inhalt eines Auftrags bestätigt werden. Ein solcher Auftrag kann beispielsweise darin bestehen, mit bestimmten Zahlenkombinationen an einer Lottoausspielung beteiligt zu werden. In diesem Beispiel ist die Bestätigungsantwort dann ein quittierter elektronischer Lottoschein.

Zum Zweck dieser Bestätigung wird unter anderem ein Datum- und Zeitstempel STi verwendet, der zusammen mit dem zu bestätigenden Text Ti zurückgeschickt wird. Es ist auch bekannt, aus den zu bestätigenden Daten eine eindeutige Kenngröße abzuleiten und nur diese bestätigend zurückzusenden. Im Beispiel wird diese Kenngröße noch mit dem auf erfindungsgemäße Weise vereinbarten Schlüssel KSi verschlüsselt.

Im vorliegenden Beispiel wird dann auch noch entweder diese Kenngröße selbst oder die mit dem Schlüssel KSi verschlüsselte Kenngröße mit dem geheimen Schlüssel PS der Zentrale verschlüsselt. Insgesamt ergibt sich eine Bestätigungsanwort von der Form A = h(Ti+STi,KSi,PR).

Die Verschlüsselung mit dem geheimen Schlüssel PR ist, wie schon eingangs erwähnt, eine quittierende elektronische Unterschrift.

Anhand der Figur 2 werden nun die erforderlichen erfindungsgemäßen Einrichtungen beschrieben:

Figur 2 zeigt eine Teilnehmereinrichtung Si und eine damit über ein Netz N verbundene Zentrale Z. Die Teilnehmereinrichtung Si weist eine teilnehmerseitige Steuereinheit CtrlS, eine teilnehmerseitige Kommunikationseinheit CMS, eine teilnehmerseitige Schlüsseleinrichtung KSiS für symmetrische Verschlüsselung und eine teilnehmerseitige Schlüsseleinrichtung UPU für unsymmetrische Verschschlüsselung auf. Das Netz N ist hier sehr vereinfachend durch eine Verzweigung dargestellt. Die Zentrale Z weist eine anbieterseitige Steuereinheit CtrlZ, eine anbieterseitige Kommunikationseinheit CMZ, eine anbieterseitige Schlüsseleinrichtung KSiZ für symmetrische Verschlüsselung und eine anbieterseitige Schlüsseleinrichtung UPR für unsymmetrische Verschlüsselung auf.

Die Teilnehmereinrichtung Si und die Zentrale Z sind nahezu gleich aufgebaut. Sie unterscheiden sich vor allem dadurch, daß die teilnehmerseitige und die anbieterseitige Steuereinheit CtrlS bzw. CtrlZ entsprechend dem anhand der Figur 1 beschriebenen Verfahrensablauf unterschiedliche Funktionen ausführen oder veranlassen müssen. Im übrigen unterscheiden sich die einander entsprechenden teilnehmerseitigen und anbieterseitigen Einrichtungen vorteilhafterweise dadurch voneinander, daß die anbieterseitigen Einrichtungen dafür vorgesehen sind, mehrere Teilnehmer im Zeitmultiplex zu bearbeiten.

Der Aufbau der Steuereinheiten CtrlS und CtrlZ ist durch den anhand von Figur 1 beschriebenen Verfahrensablauf vorgegeben. Der Aufbau der Kommunikationseinheiten CMS und CMZ und der Schlüsseleinrichtungen KSiS, KSiZ, UPU und UPR entspricht dem bekannter Kommunikationseinheiten bzw. Schlüsseleinrichtungen und ist dem Fachmann grundsätzlich bekannt.

Auch in Fällen, in denen grundsätzlich schon vorab Beziehungen zwischen den Teilnehmern und der Zentrale bestehen und in denen auch grundsätzlich schon vorab ein Schlüssel vereinbart werden könnte, kann das vorliegend beschriebene Verfahren durchaus von Vorteil sein, weil damit kein Zwang besteht, einen Schlüssel wiederholt verwenden zu müssen. Beispielsweise könnte auf diese Weise der eigene Kontostand von einer Bank abgerufen werden.

## Patentansprüche

1. Verfahren zum gesicherten Nachrichtenaustausch bei Massendiensten zwischen der Teilnehmereinrichtung (Si) eines Teilnehmers an diesem Massendienst und einer Zentrale (Z) mittels eines Schlüssels (KSi) eines symmetrischen Verfahrens, der nur bei diesem Teilnehmer und der Zentrale bekannt sein soll, durch den sowohl unverschlüsselte Daten verschlüsselt, als auch verschlüsselte Daten entschlüsselt werden können und der von seiten des Teilnehmers vorgegeben wird, **dadurch gekennzeichnet, daß** die Zentrale (Z) ein Schlüsselpaar mit einem öffentlichen Schlüssel (PU) und einem geheimen Schlüssel (PR) besitzt, wobei der öffentliche Schlüssel (PU) bei jedem Teilnehmer und der geheime Schlüssel (PR) nur bei der Zentrale bekannt sein darf, wobei die Anwendung nur eines der beiden Schlüssel (PU, PR) auf unverschlüsselte Daten diese verschlüsselt und nur die darauffolgende Anwendung des anderen Schlüssels (PR, PU) die verschlüsselten Daten wieder entschlüsselt, daß bei diesem Teilnehmer, wenn er mit der Zentrale verschlüsselt Daten tauschen möchte, zunächst der öffentliche Schlüssel (PU) des Schlüsselpaars der Zentrale und ein eigener Schlüssel (KSi) ermittelt wird, daß der Schlüssel (KSi) des Teilnehmers mit dem öffentlichen Schlüssel (PU) des Schlüsselpaars der Zentrale verschlüsselt wird und daß der so verschlüsselte Schlüssel des Teilnehmers an die Zentrale übermittelt und für die gesicherte Übertragung von Daten verwendet wird.

2. Verfahren nach Anspruch 1, dadurch gekennzeichnet, daß die Ermittlung des öffentlichen Schlüssels (PU) des Schlüsselpaars der Zentrale seitens des Teilnehmers durch eine Abfrage bei der Zentrale erfolgt.

3. Verfahren nach Anspruch 1, dadurch gekennzeichnet, daß die Ermittlung des eigenen Schlüssels (KSi) durch Auslösen eines eingebauten Schlüsselgenerators erfolgt.

4. Verfahren nach Anspruch 1, dadurch gekennzeichnet, daß die Ermittlung eines der erforderlichen Schlüssel durch Abfrage eines eingebauten Speichers erfolgt.

5. Verfahren nach Anspruch 1, dadurch gekennzeichnet, daß das Verfahren kombiniert wird mit Verfahren zur Identifizierung, zum Echtheitsnachweis oder zum elektronischen Unterschreiben.

6. Verfahren nach Anspruch 1, dadurch gekennzeichnet, daß die Zentrale eine Bestätigung an den Teilnehmer zurücksendet, mittels derer der Inhalt, der Zeitpunkt und die Tatsache des Empfangs einer Nachricht nachgewiesen werden kann.

7. Verfahren nach Anspruch 6, dadurch gekennzeichnet, daß die Zentrale die Nachricht mit einem Datum- und Zeitstempel (STi) versieht und mit dem Schlüssel (KSi) des Teilnehmers verschlüsselt an diesen zurücksendet.

8. Verfahren nach Anspruch 6, dadurch gekennzeichnet, daß die Zentrale aus der Nachricht, dem Datum und der Zeit eine eindeutige Kenngröße ableitet und diese verschlüsselt an den Teilnehmer zurücksendet.

9. Verfahren nach Anspruch 8, dadurch gekennzeichnet, daß als Schlüssel der Schlüssel (KSi) des Teilnehmers verwendet wird.

10. Verfahren nach Anspruch 8, dadurch gekennzeichnet, daß als Schlüssel der geheime Schlüssel (PR) des Schlüsselpaars der Zentrale verwendet wird.

11. Teilnehmereinrichtung (Si) zum Durchführen eines Verfahrens zum gesicherten Nachrichtenaustausch bei Massendiensten zwischen einem Teilnehmer an diesem Massendienst und einer Zentrale (Z) mittels eines Schlüssels (KSi), der nur bei diesem Teilnehmer und der Zentrale bekannt sein soll, durch den sowohl unverschlüsselte Daten verschlüsselt, als auch verschlüsselte Daten entschlüsselt werden können und der von seiten des Teilnehmers vorgegeben wird, mit Mitteln, um mit der Zentrale Daten auszutauschen, um unverschlüsselte Daten mittels des Schlüssels zu verschlüsseln und verschlüsselte Daten mittels des Schlüssels zu entschlüsseln, **dadurch gekennzeichnet, daß** diese Teilnehmereinrichtung weiter Mittel aufweist zum Umgang mit einem öffentlichen Schlüssel (PU), der zusammen mit einem geheimen Schlüssel (PR) ein Schlüsselpaar der Zentrale bildet, dessen öffentlicher Schlüssel (PU) bei jedem Teilnehmer und dessen geheimer Schlüssel (PR) nur bei der Zentrale bekannt sein darf, wobei die Anwendung nur eines der beiden Schlüssele (PU, PR) auf unverschlüsselte Daten diese verschlüsselt und nur die darauffolgende Anwendung des anderen Schlüssels (PR, PU) die verschlüsselten Daten wieder entschlüsselt, mit Mitteln, um den öffentlichen Schlüssel (PU) des Schlüsselpaars der Zentrale und einen eigenen Schlüssel (KSi) zu ermitteln und mit Mitteln, um den Schlüssel (KSi) des Teilnehmers mit dem öffentlichen Schlüssel (PU) des Schlüsselpaars der Zentrale zu verschlüsseln und den so verschlüsselten Schlüssel des Teilnehmers an die Zentrale zu übermitteln.

12. Zentrale (Z) zum Durchführen eines Verfahrens zum gesicherten Nachrichtenaustausch bei Massendiensten zwischen Teilnehmereinrichtungen (Si) von Teilnehmern an diesem Massendienst und der Zentrale (Z) mittels eines Schlüssels (KSi), der nur beim jeweiligen Teilnehmer und der Zentrale bekannt sein soll, durch den sowohl unverschlüsselte Daten verschlüsselt, als auch verschlüsselte Daten entschlüsselt werden können und der von seiten des Teilnehmers vorgegeben wird, **dadurch gekennzeichnet, daß** die Zentrale (Z) ein Schlüsselpaar mit einem öffentlichen Schlüssel (PU) und einem geheimen Schlüssel (PR) besitzt, wobei der öffentliche Schlüssel (PU) bei jedem Teilnehmer und der geheime Schlüssel (PR) nur bei der Zentrale bekannt sein darf, wobei die Anwendung nur eines der beiden Schlüssele (PU, PR) auf unverschlüsselte Daten diese verschlüsselt und nur die darauffolgende Anwendung des anderen Schlüssels (PR, PU) die verschlüsselten Daten wieder entschlüsselt, daß die Zentrale Mittel aufweist, um einen mit dem öffentlichen Schlüssel (PU) des Schlüsselpaars der Zentrale verschlüsselten Schlüssel (KSi) eines Teilnehmers mit dem geheimen Schlüssel (PR) ihres Schlüsselpaars zu entschlüsseln und anschließend mit dem Schlüssel dieses Teilnehmers mit diesem Teilnehmer verschlüsselt Daten zu tauschen.
